# EUROPEAN PATENT APPLICATION

(11) **EP 4 428 344 A1**
(43) Date of publication of application: **11.09.2024**
(21) Application number: 23160296.2
(22) Date of filing: 06.03.2023
(51) Int. Cl.: F01N 1/16, F01N 1/18, F01N 13/18, F02D 9/04, F02D 9/10, F02M 26/54, F02M 26/67, F02M 26/70, F16D 3/04, F16D 3/12, F16D 3/10, F16D 3/52, F16K 31/04

(54) **COUPLING DEVICE, VALVE SYSTEM AND METHOD FOR OPERATING A VALVE SYSTEM**

(71) Applicant: Akrapovic d.d., 1295 Ivancna Gorica (SI)
(72) Inventor: Penca, Jure, 1000 Ljubljana (SI)
(74) Representative: Schmid, Nils T.F.

(57) **Abstract**

The present invention relates to a coupling device (1) for connecting a drive shaft (31) of an actuator to a driven shaft (51) of an exhaust-gas valve, the coupling device defining a rotational axis and comprising a torsionally rigid retainer (2) having an axially extending slot (25) which also extends circumferentially; a coupling rod (45) received in the slot for translational movement 4_1, 4_2) relative to the retainer (2) in the direction of the rotational axis; and an elastic element (4) biasing the coupling rod in the direction of the rotational axis and having one end fixed to the retainer; wherein the coupling rod is rotationally movable for a predetermined tensioning angle within the edges (27) of the slot (25) relative with regard to the retainer (2).

## Description

The invention relates to a coupling device for connecting a drive shaft of an actuator to a driven shaft of an exhaust-gas valve. The invention also relates to a valve system comprising an actuator with a drive shaft, an exhaust-gas valve with a driven shaft and a coupling device. The invention further relates to a method for operating a valve system.

Exhaust line valves are commonly provided with coupling devices to connect them with the actuators for their manipulation. Although a driven shaft of an exhaust-gas valve could in theory be directly coupled to the drive shaft of an actuator, such as an electric motor, a coupling device is usually employed as an intermediary component connecting the driven shaft and the drive shaft. The coupling device serves the general task of compensating tolerances due to manufacturing error or thermal expansion. Manufacturing errors can cause a drive shaft of the valve actuator and the driven shaft of the exhaust-gas valve to be misaligned in either one or several of an axial direction, a radial direction and/or an angular orientation. Furthermore, because the valve member of the exhaust-gas is subjected to temperatures of usually several 100°C whereas the valve actuator requires an ambient temperature well below 100°C to work properly for extended periods of time, the driven shaft is subjected to significant thermal stress because of the temperature gradient.

Exhaust systems for increased performance characteristics oftentimes include exhaust-gas valve to improve sound emission characteristics and engine power characteristics. Most systems comprise only two settings in accordance with a closed or fully opened valve flap position. In many cases, when the valve is closed, the sound volume is quieter whereas an opened valve leads to an increased sound volume. Many car enthusiasts prefer louder sound volume. However, exhaust-gas valve systems are required to be compliant with increasingly strict homologation rules. In order to optimize performance while ensuring compliance, exhaust-gas valve systems are demanded that can be controlled precisely to meet both the desired noise emission and engine performance criteria.

According to EP 4008892 A1, an improved coupling device and improved valve system is disclosed providing a non-rotatable connection between a coupling rod of the coupling device and a retaining element which is designed to transfer any torque generated by the actuator to the driven shaft of the valve member. This configuration allows for a rapid and precise positioning of the valve while decreasing any rattling noise and decreasing any thermal effects of the components of the valve system.

Although the valve system according to EP 4008892 A1 has a significantly improved reliability, there is still room for optimization, in particular with regard to improving the rattling noises and the torsional stiffness of the coupling device.

Further, from US 10927797 B2, a similar valve system design is shown. In US 10927797 B2 the fixed spring end surrounds the main rotational axis and is fixed with two formed fixtures that surround and hold the spring end in place. When an actuator is in assembly with the clutch, it has a direct contact with the element retaining the clutch, i.e. a sheet metal part.

When addressing the problem of valve rattling it has been found out that there is a demand for a high torque transfer from the actuator to the valve. High torques come with high stress especially when high torque is applied in a very short time. This kind of instant torque deliverance causes high stress on the actuator and its gears and therefore results in wear leading to a decreased lifetime of the components.

It is an object of the invention to overcome the disadvantages of the prior art, particularly to provide a valve system and a coupling device with improved reliability particularly with a further reduced tendency and existence of rattling as well as a prolongated lifetime of its actuator.

This object is solved by the subject matter of the independent claims.

Accordingly, a coupling device is provided for connecting a drive shaft of an actuator to a driven shaft of an exhaust-gas valve. The actuator may in particular comprise an electric motor, such as a stepper motor, a servomotor, a brushed DC motor, an electrically excited DC motor, a permanent magnet DC motor, a brushless DC motor, a switched reluctance motor, a torque motor, a synchronous motor or the like. Preferably, the actuator is a server motor or stepper motor. The driven shaft of the actuator transfers movement from the actuator towards driven components including an exhaust-gas valve. The drive shaft is preferably coupled directly to an electromagnetic component of the electric motor or coupled to an electro-magnetic component of the motor via a reduction gear transmission.

The exhaust-gas valve may comprise a valve member, such as a flap, attached to a driven shaft. The driven shaft is configured to receive a rotary motion and/or torque from the drive shaft of the actuator to transfer a torque and/or rotary motion towards the valve member. Preferably, the valve member, in particular the valve flap, and the driven shaft are non-rotatably connected to one another; in other words, the driven shaft and the valve member are connected in a torque-proof manner. For instance, the valve member can be welded to the driven shaft, or the valve member and driven shaft may be forged as a single-piece unit. The valve member of the exhaust-gas valve is in particular configured to be movable within a preferably tubular section of an exhaust tract for selectively opening or closing the section of the exhaust tract for the transmission of the exhaust-gas and/or sound. In particular, the exhaust-gas valve may comprise a tubular section of an exhaust system in which a flap is arranged, wherein the flap is dimensioned so that it can close the cube. The shape of the flap may correspond to the shape of the interior cross section of the tubular section. The driven shaft is preferably arranged perpendicular to the orientation of the tubular section. The driven shaft may be guided into the tubular section through an opening provided with a seal. The driven shaft defines a shaft axis around which the valve member can be rotated. The drive shaft defines a drive axis. In a preferred embodiment of a valve system, the drive axis and the valve axis are coaxially aligned. Alternatively, the valve axis may be offset relative to the drive axis, in particular angularly offset and/or offset in the radial direction relative to the drive axis. A valve axis offset both radially and angularly in relation to the drive axis may be described as being skew in relation to the drive axis.

The valve member can be arranged within the tube section in a multitude of differ-ent positions in which the valve member fully closes the inner cross-section of the cube section or a position in which the obstruction caused by the valve member to exhaust-gas flowing through the tubular section is minimized. The valve member may be oriented within the tubular section in alignment with the middle-line of the tubular section so as to minimize the flow resistance caused by the valve member, particularly the flap, to the exhaust-gas. The valve member can be positioned in a multitude of different positions particularly between 0° relative to the middle line of the tube section and 90° relative to the middle line of the tube section. In the preferred embodiment, the position of the valve member relative to the tube section of the exhaust-gas valve may be continuously variable, particularly in a stepless manner.

The coupling device is provided to transfer motion and/or torque from the drive shaft to the driven shaft. The coupling device itself defines a rotational axis. The coupling device according to the disclosure comprises a torsionally rigid retain-er having an axially extending slot. It shall be clear that the retainer provides sufficient rigidity such that no deformation of the retainer is caused by the operation of the exhaust-gas valve. Any torque transferred from the drive shaft to the driven shaft via the retainer causes virtually no deformation of the retainer. The maximum force of the actuator drive exerted upon the torsionally rigid retainer causes less than 1%, in particular less than 0,5%, preferably less than 0,1% deformation to the retainer in relation to its rotational axis. The retainer can be manufactured using one or several different manufacturing methods including turning, milling and/or sheet metal bending. The coupling device further comprises a coupling rod received in the slot for translational movement of the rod relative to the retainer in the direction of the rotational axis. The coupling rod may move in the slot parallel to the rotational axis. The coupling rod is received in the slot in a play-free manner in a direction circumferential relative to the rotational axis. Furthermore, the coupling device comprises an elastic element, in particular a spring, biasing the coupling rod in the direction of the rotational axis and having an attachment section fixed to the retainer. The elastic element may have a first end firmly attached to the retainer at the attachment section of the elastic element. The attachment section of the elastic element may be a terminal end of a spring. The fixed attachment of the elastic element to the retainer may be provided for example by welding, soldering, moulding, forging, gluing or the like. The coupling rod is biased by the elastic element in the direction of its translational movability within the slot. Any displacement of the coupling rod within the slot into a first, compression direction and/or second, tension direction parallel to the rotational axis is counteracted by a biasing force of the elastic element. The coupling rod may be a second terminal end of the elastic element, such as spring. The rotational axis of the coupling device is the axis around which its component rotates for transferring rotational movement from the drive shaft to the driven shaft. The rotational axis of the coupling device is preferably oriented either coaxially aligned with both the drive axis and the valve axis or angularly offset but radially aligned (crossing) both the drive axis and the valve axis. The coupling device compensates for any misalignment of the drive axis of the drive shaft in relation to the valve axis of the driven shaft.

Preferably the elastic element is compressible in the axial direction. Alternatively or additionally, the elastic element is stretchable in the axial direction. The elastic element may include a particularly rod-like attachment section at its first axial end and the coupling rod at its second axial end. The elastic element, particularly a coil spring and the coupling rod, may be formed in a one-piece manner, in particular as a thread, preferably of a constant diameter. The coupling rod and the remaining elastic element, in particular coil spring, can have a constant thread diameter along the entire extension of the thread. A coupling device having an elastic element comprising an attachment rod as its attachment end may have the same, constant thread diameter of the coupling rod also at the attachment rod. It may be preferred that the elastic element including the attachment rod and the coupling rod is formed a one-piece manner. In particular, the thread section forming the rectilinear coupling rod and the thread section forming the rectilinear attachment rod are arranged across one another, particularly at an angle of 90°. A coupling rod and the attachment rod may alternatively be arranged in parallel to one another. Preferably, the angle between the coupling rod and the attachment rod is smaller than 60°, particularly smaller than 30°, most preferably smaller than 10°.

Such a coupling device may particularly consist of the coil spring including the coupling rod and the rigid retainer.

In particular, the coupling device may consist of the elastic element, the coupling rod and the retainer. A rod-shaped attachment section or attachment rod may be oriented at an angle, preferably perpendicular in relation to the coupling rod. In relation to the rotational axis of the coupling device, the coupling rod may be oriented in a first crosswise direction and the attachment rod may be oriented in a second crosswise direction. By arranging the attachment rod and the coupling rod at an angle relative to one another, a cardanic function of the coupling device may be enabled.

According to one aspect of the present invention, the coupling rod is rotationally movable for a predetermined tensional angle β2 within the slot relative with regard to retainer. This relative rotational movement improves non-rattling of the coupling device. It has been found out that the rattling is still a significant problem. In exhaust systems, there is a presence of pulses of hot gases exiting the cylinders which have a negative impact on the construction of the valve. Forces imposed on the valve inner assembly by the pulses may be so high that it starts to move around its rotational axis, thereby causing valve rattling. According to the inventive coupling device, this effect is drastically reduced, in particular prohibited, over a wider range of operating states. In general, it has been found out that when addressing the problem of valve rattling, there is a demand for high torque transfer from the actuator to the valve. But with a high torque comes high stress, especially when high torque is applied in a very short time. This kind of instant torque deliverance causes high stress on the actuator and its gears. To compensate the wear on the valve position where it matters the most, the present invention provides a way to widen the time frame in which maximum torque may be applied and at the same time being able to store a sufficient amount of torque in the coupling device to compensate for the wear and the loss of torque due to clearances that appear in the assembly during operation.

According to an example embodiment of the present invention, the predetermined tensional angle β2 is in the range of 5° to 30°, in particular in the range of 7.5° to 25°, in the range of 10° to 20°, in the range of 12.5° to 7.5° or approximately 15°. Tensioning angles in the described range have been proven to be most effective in terms of cancelling rattling effects.

According to another embodiment of the present invention, the predetermined tensioning angle is wider than a cross-sectional dimension of the coupling rod, in particular a diameter of a wire of a spring forming the coupling rod. By providing a tensioning angle that is wider than a cross-sectional dimension of the coupling rod, it is ensured that the tensional angle succeeds a minimal torsional pre-tensioning movement in order to effectively reduce any rattling.

In a further example embodiment of the present invention, the axial biasing of the coupling rod in the direction of the rotational axis remains constant during a tensioning movement of the coupling rod relative with regard to the retainer within the slot. This means that the general coupling device arrangement remains constant even when the additional pre-tensioning movement is performed. In particular, the pre-tensioning movement may be performed independent from any axial biasing forces within the coupling device such that any damage or side effects of any unintended further axial biasing is prevented.

In another example embodiment of the present invention, the elastic element comprises a spring, preferably a coil spring, that increases in diameter when the coupling rod is rotationally moved for the predetermined tensioning angle β2 within the slot relative with regard to the retainer. In other words, when the coupling rod is rotationally moved for the predetermined tensioning angle β2 within the slot relative with regard to the retainer, the spring expands in a direction perpendicular with regard to the translational axis of the coupling device. As a consequence, the parameter of the spring increases.

Another aspect of the invention, which may be combined with the previous aspects and/or preferred embodiments, relates to a valve system comprising an actuator with a drive shaft, an exhaust-gas valve with a driven shaft and a coupling device connecting the driven shaft to the drive shaft. The coupling device may in particular be configured as described above.

Another aspect of the present invention which may be combined with the previous aspects and/or preferred embodiments relates to a valve system comprising an actuator with a drive shaft and a coupling section, an exhaust gas valve with a driven shaft and a coupling device in particular configured according to one of the previous aspects and/or preferred embodiments connecting the driven shaft to the drive shaft.

According to a further aspect of the present invention, the coupling device is configured to transmit a torque generated by the actuator to the exhaust gas valve for moving the exhaust gas valve between at least the open state and a closed state, wherein a torsional stiffness and/or a torque gradient in the opening rotating direction differs from a torsional stiffness and/or torque gradient in the closing rotating direction. The valve system may be configured such that the coupling device offers in the closing direction an extra tensioning movement to ensure a higher end holding torque to eliminate all remaining clearances between the parts in assembly. A further positive effect is that the overall lifetime of the actuator may be increased. By providing a higher end torque, the effects of rattling may be decreased, in particular prevented. It has been found out that the torsional stiffness and the necessary torque gradient, in contrary to prior art coupling devices, where the goal is to have a continuous analog value, may be individually adapted and/or configured to be more flexible when addressing the problem of rattling noises and/or effects.

In an example embodiment of the present invention, the torque gradient in the opening rotating direction is steeper, preferably also continuous, than the torque gradient in the closing rotating direction. It has been found out that it is beneficial to have a lower gradient of torque curve in the closing direction to reach higher torque holding values in the end position. Vibrations during exhaust system usage tend to lower the end holding torque which effects can be compensated by the inventive torque gradient.

In a further example embodiment of the valve system according to the invention, the torque gradient in the closing rotating direction is smaller for a closing angle between 0° and a predetermined tensioning angle β2 than for a closing angle between β2 and the fully closed state of the exhaust gas valve. In other words, in the closing direction, the torque gradient curve has a two-stage curvature. The first one being the response due to torsional stiffness of the elastic element, the second one being the response due to torsional stiffness of the elastic element and the retainer as a one-part. On the one hand, rattling effects may be limited, in particular prevented, and on the other hand the lifetime of the actuator may be decreased.

According to another aspect of the present invention, which may be combined with the previous aspects and preferred embodiments, a valve system comprising an actuator with a drive shaft and a coupling section, an exhaust gas valve with a driven shaft and a coupling device in particular configured according to one of the preceding aspects and/or preferred embodiments of the present invention, connecting the driven shaft to the drive shaft is provided.

The coupling device has a torsional rigid retainer and an elastic element being biased with regard to the retainer in a longitudinal direction of the drive shaft. Further, a torque generated by the actuator is transmitted to the coupling device via three separate torque-transmitting interfaces of the coupling section and the coupling device. One torque-transmitting interface may be provided between the coupling section and the elastic element, in particular by a form- and/or force-fitting engagement of the elastic element with the coupling section of the actuator. The coupling section of the actuator may comprise an axially-extending slot in which an end section of the elastic element, which may be configured as a spring, may be received such that a torque generator or rotator may be transmitted to the exhaust gas valve via the elastic element. Further, at least one, in particular two, further torque-transmitting interfaces may be provided between the retainer and the coupling section of the actuator. It may be possible that the retainer has an engagement section which is also form- and/or force-fittingly received within the engaging slot of the actuator.

In another example embodiment of the present invention, the elastic element biases the coupling device in the direction of rotation, wherein particularly the elastic element comprises a first biasing coupling device via its torsional force direction of rotation. The elastic element, connecting in particular the coil spring, may encompass the rigid retainer, in particular in a screw- or spiral-like manner and/or may have two end sections, one of which is received within the slot being configured to provide the holding force with respect to the retainer.

According to a further aspect of the present invention, which may be combined with the previous aspects and preferred embodiments, a method for operating a valve system, in particular according to one of the previous aspects of the further embodiments, is provided. The valve system has an actuator with a drive shaft and a coupling section, an exhaust gas valve with a driven shaft, and a coupling device which is particularly configured according to one of the previous aspects and/or preferred embodiments connecting the driven shaft to the drive shaft and determining the rotational axis. The coupling device further has a torsional rigid retainer and an elastic element, in particular in the form of a coil spring, comprising a coupling rod biased in the direction of the rotational axis and an attachment section fixed to the retainer. The operating method comprises the following steps:
a) opening the exhaust gas valve by means of rotating the coupling device and the exhaust gas valve for a predetermined opening angle via the actuator;
b) closing the exhaust gas valve by means of rotating the coupling device and the exhaust gas valve for a predetermined closing angle via the actuator; and
c) further rotating the coupling device in the direction of the closing angle for a predetermined tensioning angle β2 relative with regard to the retainer.

It has been found out that the rattling is still a significant problem. In exhaust systems, there is a presence of pulses of hot gases exiting the cylinders which have a negative impact on the construction of the valve. Forces imposed on the valve inner assembly by the pulses may be so high that it starts to move around its rotational axis, thereby causing valve rattling. According to the inventive coupling device, this effect is drastically reduced, in particular prohibited, over a wider range of operating states. In general, it has been found out that when addressing the problem of valve rattling, there is a demand for high torque transfer from the actuator to the valve. But with a high torque comes high stress, especially when high torque is applied in a very short time. This kind of instant torque deliverance causes high stress on the actuator and its gears. To compensate the wear on the valve position where it matters the most, the present invention provides a way to widen the time frame in which maximum torque may be applied and at the same time being able to store a sufficient amount of torque in the coupling device to compensate for the wear and the loss of torque due to clearances that appear in the assembly during operation.

Advantageous embodiments are subject to the dependent claims and will be set out herein below.

The following detailed description refers to the accompanying drawings. The same reference numbers may be used in different drawings to identify the same or similar elements. In the following description, for purposes of explanation and not limitation, specific details are set forth such as particular structures, functionality, etc. in order to provide a thorough understanding of the various aspects of the claimed invention.

However, it will be apparent to those skilled in the art having the benefit of the present disclosure that the various aspects of the invention claimed may be practiced in other examples that depart from these specific details. In certain instances, descriptions of well-known devices and methods are omitted so as not to obscure the description of the present invention with unnecessary detail.
- Figure 1: shows an example of a valve system according to the invention including an actuator, an exhaust-gas valve and a coupling device;
- Figure 2: shows the valve system of Figure 1 in a perspective view;
- Figure 3: shows an example embodiment of a coupling device according to the invention in a perspective view;
- Figure 4: shows an elastic element of the coupling device of Figure 3 in a schematic top view;
- Figure 5: shows the coupling device of Figure 3 in a schematic top view;
- Figure 6: shows two torque diagrams in end positions of the coupling device; and
- Figures 7-8: show further views of another example embodiment of a coupling device according to the invention.

In the following illustration of preferred embodiments of a valve system or coupling device in accordance with the invention, the same or similar reference numerals are used to designate the same or similar components.

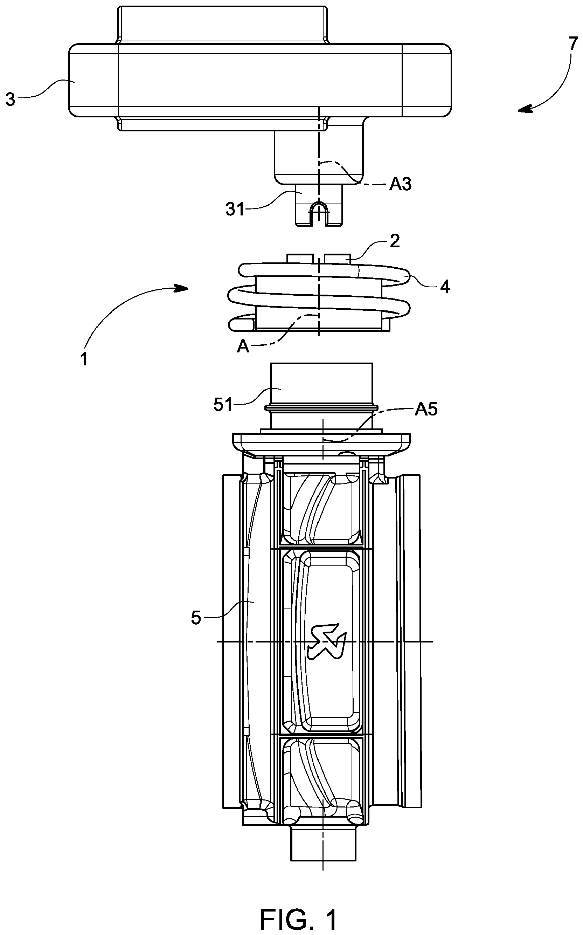

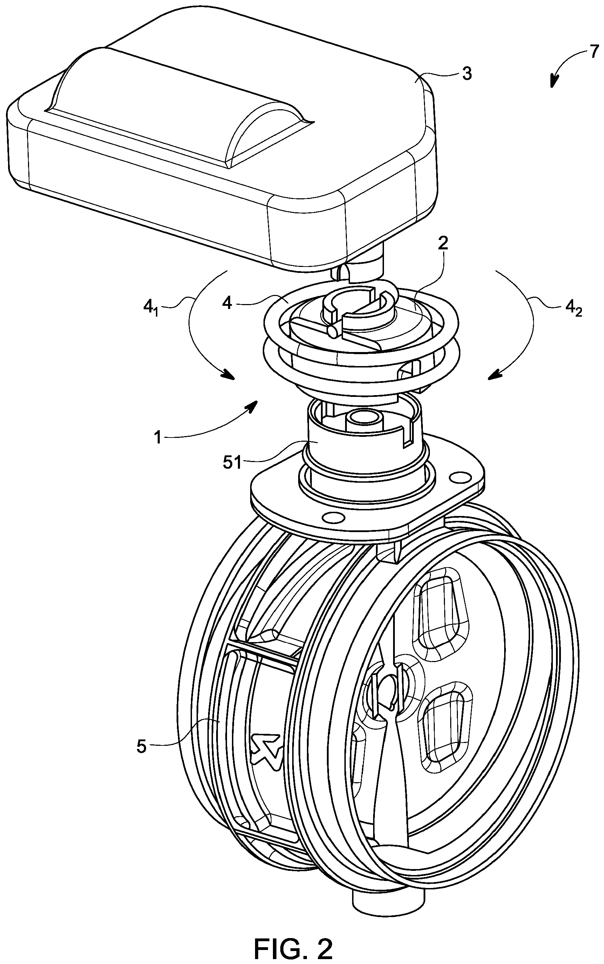

A coupling device according to the invention is generally designated with reference numeral 1. The coupling device 1 comprises as its main constituents a torsional rigid retainer 2 and an elastic element 4. The valve system according to the invention is generally designated with the reference numeral 7. The valve system 7 according to Figures 1 and 2 comprises as its main constituents an actuator 3, an exhaust-gas valve 5 and a coupling device 1.

In the exemplary embodiment shown in figure 1, the valve system 7 comprises the coupling device 1 interposed between an actuator 3 and an exhaust-gas valve 5 for transferring rotary motion from the actuator 3 to the exhaust-gas valve 5. The actuator 3 has a drive shaft 31. The exhaust-gas valve 5 has a driven shaft 51. The coupling device 1 connects the drive shaft 31 to the driven shaft 51 to transfer force and/or motion from the actuator 3 to the exhaust-gas valve 5.

The coupling device 1 provides an axial clearance to allow for thermal expansion or the like of the exhaust-gas valve. The coupling device 1 may be configured particularly as cardanic element to compensate any radial offset between the axis A3 of rotation of the drive shaft 31 and the axis A5 of rotation of the driven shaft 51. That is, in case the axis A3 of the actuator 3 is not coaxially aligned with the axis A5 of the exhaust-gas valve 5, but offset in radial direction such a radial offset may be compensated by the coupling device 1.

Alternatively or additionally, the valve coupling device 1 may be configured to compensate an angular offset between the axis A3 of rotation of the actuator 3 and the axis A5 of rotation of the exhaust-gas valve 5. For example, if the valve's axis A5 of rotation is tilted or skewed in relation to the actuators 5 axis A5, the coupling device 1 compensates for the misalignment and connects the valve 5 to the actuator 3.

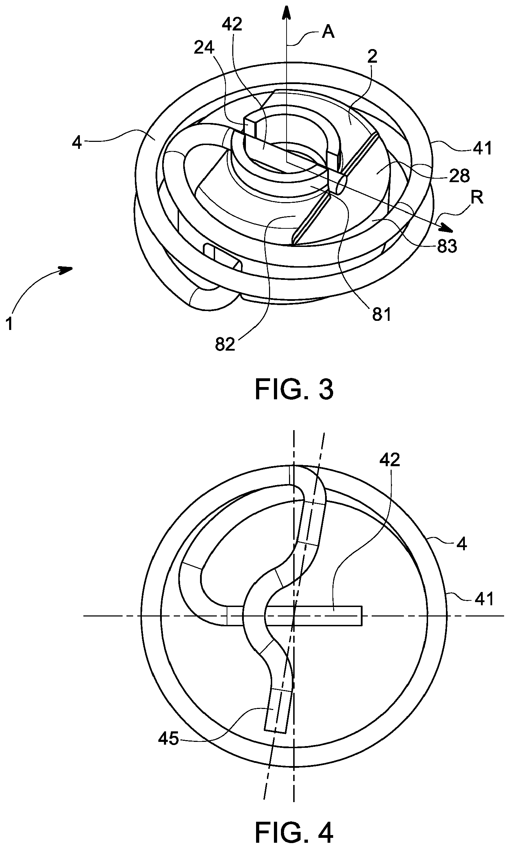

A first embodiment of a coupling device 1 is shown in a sectional view in Figures 3 to 5 wherein in Figure 4 the retainer 2 is not shown for the purpose of illustration. In this embodiment, the elastic element 4 of the coupling device 1 is realized as a hollow cylindrical coil spring 41. The coil spring 41 has a first terminal end realizing the attachment section 42. The second terminal end of the coil spring 41 realizes the coupling rod 45.

The torsional rigid retainer 2 is coupled to the elastic element 4. The retainer 2 consists of a hollow cylindrical body 28 having a staged diameter. In the present embodiment, the cylindrical retainer in a body 28 has a narrow section 81 and a wide section 83. The wall thickness of the cylindrical body 28 is essentially constant.

The narrow section 81 includes a circular recess 24 which may circumferentially completely surround the attachment section 42 received therein. The attachment section 42 of the elastic element 4 may be fixed to the retainer 2 by welding. The attachment section 42 is inserted into the recess 24 of the retainer 2 and the elastic element 4 is fixed to the retainer 2 and the position of the recess 24 receiving the attachment section 42 to prohibit relative rotational movement of the attachment section 42 in relation to the retainer 2. Once the attachment section 42 of the elastic element 4 is fixed to the retainer 2, only the coupling rod 45 remains movable in relation to the retainer 2.

In the circumferential direction relative to the rotational axis A of the coupling device 1, the coupling rod 45 is essentially prohibited from rotational movement in relation to the retainer 2. The coupling rod 45 is received in particular form- and/or forcefittingly within a slot 25 of the retainer 2. In case torque is exerted onto the coupling rod, the coupling rod 45 transfers the torque to the edges 27 of the slot 25. The edges 27 of the slot 25 are arranged opposite one another in the circumferential direction regarding to the axis A of rotation and are distanced apart from one another in a distance defining the width of the slot 25. As the elastic element is fixed at its attachment section 42 to the retainer 2, for ex-ample by welding, gluing, over moulding or the like, and as the coupling rod 45 is received within the slot 25, any torque exerted upon the coupling rod 45 or the attachment section 42 from an external influence is transferred to the torsional rigid retainer. The axial extension of the slot 25 within the cylindrical body 28 of the retainer 2 is less than 10 times, preferably less than 5 times, more preferably less than 3 times the axial width, preferably the diameter of the coupling rod 45. The axial extension of the slot 25 within the bottom of the retainer 2 is less than half the axial extension of the retainer 2. In the assembled state of the coupling device 1, preferably the assembled state of the valve system 7, the coupling rod 45 is completely received within the slot 24 in the direction of the rotational axis A. It shall be clear that the terms "direction of the rotational axis" and "axial direction" are used synonymously within this disclosure.

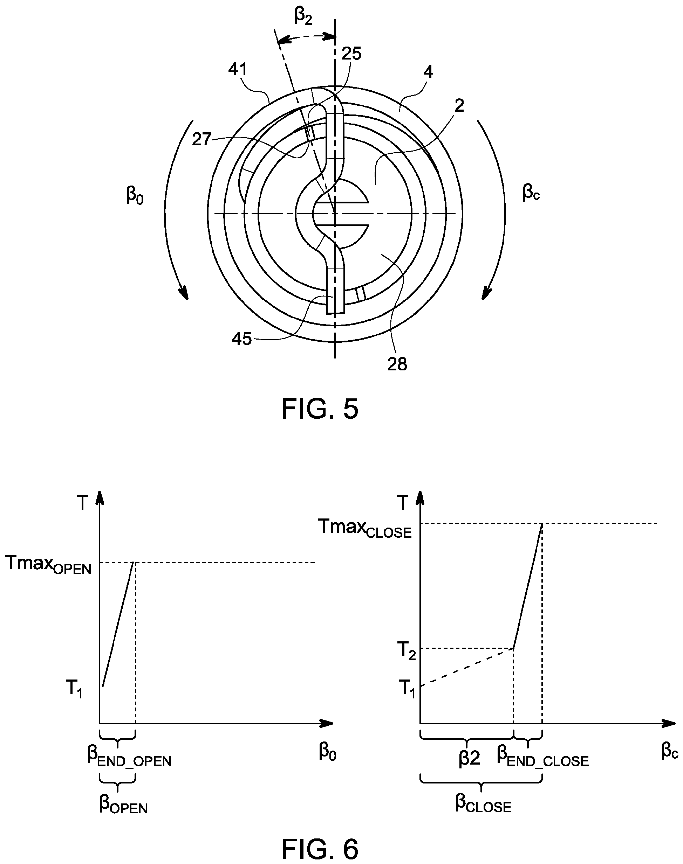

Referring to Figure 5, a key feature of the present invention for reducing rattling is illustrated. The slot 25 in which the coupling rod 45 is received, additionally to the axial extension, extends over a predetermined distance in the circumferential direction, which is wider, in particular at least 50 %, at least 100 %, at least 150 % or at least 200 %, wider than a cross-sectional dimension of the coupling rod 45 which is realized by a wire of the coil spring 41. By providing the circumferential slot extension, the coupling rod 45 is rotationally movable for a predetermined tensioning angle β2 within the slot 25 relative with regard to the retainer 2, the tensioning angle β2 being defined by the circumferential extension of the slot 25. As a consequence, a torsional stiffness and/or torque gradient in the first rotational direction, in particular the opening rotating direction, differs from a torsional stiffness and/or torque gradient in a second rotational direction, in particular the closing rotating direction. The closing rotating direction is indicated by the reference sign βc, the opening rotating direction is indicated by the reference sign βo.

This behavior of the of the inventive valve system 7, in particular the inventive coupling device, is shown at torque diagrams in Figure 6, the diagram on the left side indicating the torque behavior when the valve flap is already in the fully opened position, wherein the diagram on the right side indicates the torque behavior when the valve flap is already in the fully closed position. When an opening torque is provided by the actuator, before a predetermined time slot (until T1), no rotational movement occurs due to the actuator firstly overcoming internal valve friction resistance. Having overcome the internal valve friction, the valve flap fully opens (at T1). From this point on, no further rotational movement occurs. However, the actuator reduces its maximum opening torque in order to apply a biasing/pretensioning force (βₒₚₑₙ corresponds to β_{end open}).

Referring to the right torque diagram indicating the closing rotating movement of the valve flap, again, firstly, the actuator has to overcome the internal valve friction and fully closes the valve flap afterwards (at T1). As can be seen in Figure 6, right diagram, the closing rotating movement has a staged torque gradient, wherein in a first phase (β2), the torque gradient is smaller than the torque diagram in the end phase of the closing movement (β_{endclosed}).This is due to the fact that in the first closing phase (β2), only the torsional stiffness of the elastic element is active, wherein in the β_{end closed}-phase, the torsional stiffness of the retainer and the elastic element of a unit is active. By implementing this kind of behavior into the coupling device, the lifetime of the actuator may be increased. By implementing this high torque transfer, the time frame in which the maximum torque gradient may be applied is increased and at the same time a sufficient amount of torque in the coupling device 1 is present to compensate for the wear and the loss of the torque due to the clearances that appear in the assembly during operation, thereby the problem of rattling may be reduced or prevented.

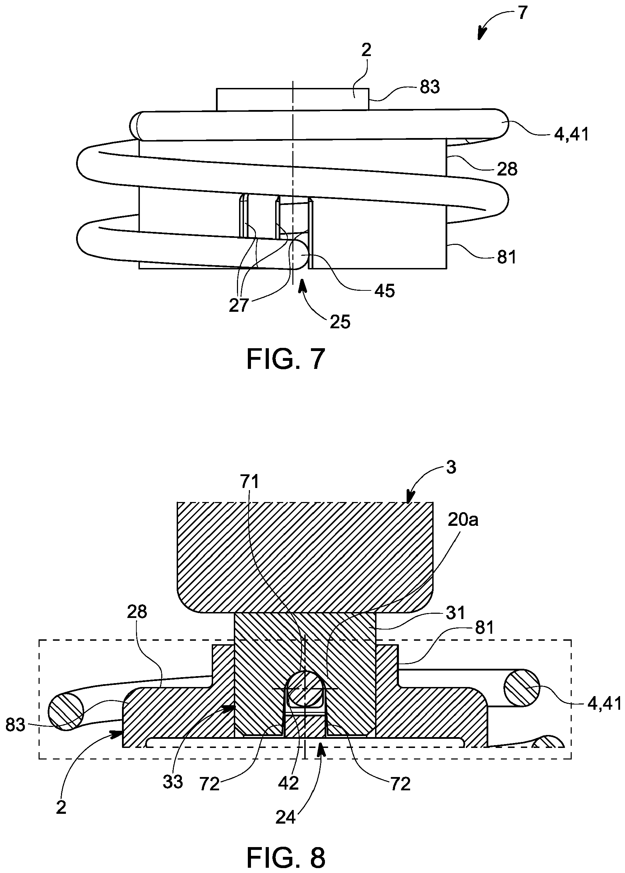

Referring now to Figures 7 and 8, the engagement of the coil spring 41 on the one hand with the retainer 2 (Figure 7) and on the other hand with the drive shaft 31 of the actuator 3 (Figure 8) is illustrated. As previously described, the coupling rod 45 is received within the slot 25 such that the pretensioning movement for the extent of the pretensioning angle β2 is enabled. In Figure 8, the engagement of the attachment section of the coil soring 41 in the recess 24 of the coupling section 31 of the actuator 3 is shown in a cross-sectional view.

In Figure 8, a further aspect of the present invention is highlighted with regard to the separate torque-transmitting interfaces. The torque-transmitting interfaces for transmitting the torque generated by the actuator 3 via the coupling device 1 to the exhaust gas valve 5 are given by two radially opposite contact lines 72 of the coupling device 1. The attachment section 42 and of the elastic element 4 sits in the engagement portion 33 of the drive shaft 31 of the actuator 3, wherein a single contact line 71 is realized between the attachment section 42 and the drive shaft 31. The engagement section 33 of the driving shaft 31 extends into the coupling device 1 between the engagement section 33 and firmly grasps the edges of a bridge section 20a of the retainer 2.

The features disclosed in the above description, the figures and the claims may be significant for the realization of the invention in its different embodiments individually as in any combination.

### REFERENCE SIGN LIST

- 1: Coupling device
- 2: Torsionally rigid retainer
- 3: Actuator
- 4: Elastic element
- 5: Exhaust-gas valve
- 7: Valve system
- 20a: Bridge section
- 21: Apertures
- 24: Recess
- 25: Slot
- 27: Edges
- 28: Cylindrical body
- 31: Drive shaft
- 33: Engagement section
- 41: Coil spring
- 42: Attachment section
- 45: Coupling rod
- 51: Driven shaft
- 71: Contact lines
- 72: Contact lines
- 81: Narrow section
- 83: Wide section

- A: axis
- β: angle

## Claims

1. A coupling device (1) for connecting a drive shaft (31) of an actuator (3) to a driven shaft (51) of an exhaust-gas valve (5), the coupling device (1) defining a rotational axis (A) and comprising:
a torsionally rigid retainer (2) having an axially extending slot (25);
a coupling rod (45) received in the slot (25) for translational movement relative to the retainer (2) in the direction of the rotational axis (A); and
an elastic element (4) biasing the coupling rod (45) in the direction of the rotational axis (A) and having an attachment section (42) fixed to the retainer (2); wherein the coupling rod (45) is rotationally movable for a predetermined tensioning angle (β2) within the slot (25) relative with regard to the retainer (2).

2. The coupling device (1) according to claim 1, wherein the predetermined tensioning angle (β2) is in the range of 5° to 30°, in particular in the range of 7,5° to 25°, in the range of 10° to 20°, in the range of 12,5° to 17,5°, or approximately 15°.

3. The coupling device (1) according to claim 1 or 2, wherein the predetermined tensioning angle (β2) is wider than a cross-sectional dimension of the coupling rod (45), in particular a diameter of a wire of a spring forming the coupling rod (45).

4. The coupling device (1) according to one of the preceding claims, wherein the axial biasing of the coupling rod (45) in the direction of the rotational axis (A) remains constant during a tensioning movement of the coupling rod (45) relative with regard to the retainer (2) within the slot (25).

5. The coupling device (1) according to one of the preceding claims, wherein the elastic element (4) comprises a spring, preferably a coil spring, that increases in diameter when the coupling rod (45) is rotationally moved for the predetermined tensioning angle (β2) within the slot (25) relative with regard to the retainer (2).

6. A valve system (7) comprising:
an actuator (3) with a drive shaft (31) and a coupling section;
an exhaust-gas valve (5) with a driven shaft (51);
and a coupling device (1) according to one of the preceding claims connecting the driven shaft (51) to the drive shaft (31).

7. A valve system (7), in particular according to claim 6, comprising:
an actuator (3) with a drive shaft (31) and a coupling section;
an exhaust-gas valve (5) with a driven shaft (51);
and a coupling device (1) in particular according to one of the claims 1 to 5 connecting the driven shaft (51) to the drive shaft (31) and being configured to transmit a torque generated by the actuator (3) to the exhaust-gas valve (5) for moving the exhaust-gas valve (5) between at least one open state and a closed state, wherein a torsional stiffness and/or a torque gradient in the opening rotating direction differs from a torsional stiffness and/or a torque gradient in the closing rotating direction.

8. The valve system (7) according to claim 7, wherein the torque gradient in the opening rotating direction is steeper, preferably also continuous, than the torque gradient in the closing rotating direction.

9. The valve system (7) according to claim 7 or 8, wherein the torque gradient in the closing rotating direction is smaller for a closing angle between 0° and a predetermined tensioning angle (β2) than for a closing angle between β2 and the fully closed state of the exhaust-gas valve (5).

10. A valve system (7), in particular according to one of claims 6 to 9, comprising:
an actuator (3) with a drive shaft (31) and a coupling section;
an exhaust-gas valve (5) with a driven shaft (51);
and a coupling device (1) in particular according to one of the claims 1 to 5 connecting the driven shaft (51) to the drive shaft (31), the coupling device (1) having a torsionally rigid retainer (2) and an elastic element (4) being biased with regard to the retainer (2) in a longitudinal direction of the drive shaft (31);
wherein a torque generated by the actuator (3) is transmitted to the coupling device (1) via three separate torque transmitting interfaces of the coupling section and the coupling device (1).

11. The valve system (7) according to one of claims 6 to 10, wherein the elastic element (4) biases the coupling device (1) in the direction of rotation, wherein particularly the elastic element (4) comprises a coil spring (41) biasing the coupling device (1) via its torsional force in the direction of rotation.

12. A method for operating a valve system (7) in particular according to one of the claims 6 to 11, the valve system (7) having an actuator (3) with a drive shaft (31) and a coupling section, an exhaust-gas valve (5) with a driven shaft (51), and a coupling device (1) in particular according to one of the claims 1 to 5 connecting the driven shaft (51) to the drive shaft (31) and defining a rotational axis (A), the coupling device (1) having a torsionally rigid retainer (2) and an elastic element (4) in particular in the form of a coil spring (41) comprising a coupling rod (45) biased in the direction of the rotational axis (A) and an attachment section (42) fixed to the retainer (2), comprising the following steps:
a) opening the exhaust-gas valve (5) by means of rotating the coupling device (1) and the exhaust-gas valve (5) for a predetermined opening angle via the actuator (3);
b) closing the exhaust-gas valve (5) by means of rotating the coupling device (1) and the exhaust-gas valve (5) for a predetermined closing angle via the actuator (3); and
c) further rotating the coupling device (1) in the direction of the closing angle for a predetermined tensioning angle (β2) relative with regard to the retainer (2).
